# EUROPEAN PATENT APPLICATION

(11) **EP 2 993 328 A1**
(43) Date of publication of application: **09.03.2016**
(21) Application number: 15183075.9
(22) Date of filing: 31.08.2015
(51) Int. Cl.: F02B 33/00, F02B 39/10, F02B 37/04, F02B 37/12, F02D 9/02, F02D 41/00, F02D 41/12

(54) **INTERNAL COMBUSTION ENGINE SYSTEM**

(30) Priority: 02.09.2014 JP 2014178218
(71) Applicant: Toyota Jidosha Kabushiki Kaisha, Toyota-shi, Aichi-ken 471-8571 (JP)
(72) Inventor: HIRAYAMA, Yuki, TOYOTA-SHI, AICHI-KEN, 471-8571 (JP)
(74) Representative: Intès, Didier Gérard André

(57) **Abstract**

An internal combustion engine system (10) includes: an electric supercharger (26) and a turbo-compressor (20a) that are arranged in series in that order; a first intake bypass passage (22) that bypasses the turbo-compressor (20a); and a first intake bypass valve (24) that opens and closes the first intake bypass passage (22). In a case where a request to decelerate the internal combustion engine is issued during driving of the compressor wheel (26a) by the electric motor (26b), driving of the compressor wheel (26a) by the electric motor (26b) is stopped simultaneously with the start of an opening operation by the first intake bypass valve (24).

## Description

### Background of the Invention

### Field of the Invention

The present invention relates to an internal combustion engine system having an electric supercharger together with a turbosupercharger as superchargers.

### Background Art

A control device for an internal combustion engine equipped with two turbo superchargers which each include a turbo-compressor has already been disclosed in, for example, Japanese Patent Laid-Open No. 2008-075549. In the aforementioned internal combustion engine, the two turbo-compressors are disposed in series in an intake passage. The respective turbo-compressors include an intake bypass passage that bypasses the turbo-compressor and an intake bypass valve.

### Technical Problem

A configuration that includes an electric supercharger and a turbo-compressor that are provided in series in that order is known as an internal combustion engine system that includes two compressors. With this configuration, the following situation arises when operation of the electric supercharger is stopped when a request to decelerate the internal combustion engine is issued during supercharging that utilizes both compressors. That is, the rate of a decrease in the rotational speed of the electric supercharger after operation thereof has been stopped is faster than that of the turbo-compressor to which a driving force that is based on exhaust energy continues to be supplied. Consequently, while on the one hand there is a rapid decrease in the pressure downstream of the electric supercharger, that is, the inlet pressure of the turbo-compressor, on the other hand it becomes difficult for the outlet pressure of the turbo-compressor to decrease. Therefore, the pressure ratio between the pressures before and after the turbo-compressor is liable to increase. If the pressure ratio remains high under circumstances in which the flow rate of air passing through the turbo-compressor decreases due to deceleration of the internal combustion engine, surge is liable to occur at the turbo-compressor.

### Summary of the Invention

The present invention has been conceived to address the above-described problem, and an object of the present invention is to provide an internal combustion engine system that includes an electric supercharger and a turbo-compressor that are arranged in series in that order, and that is configured so that the occurrence of surge in the turbo-compressor is effectively suppressed in a case where a request to decelerate the internal combustion engine is issued during supercharging that utilizes both of the compressors.

A first aspect of the present invention is an internal combustion engine system. The internal combustion engine system includes: a turbosupercharger including a turbine that is provided in an exhaust passage and that operates by means of exhaust energy of an internal combustion engine, and a turbo-compressor that is provided in an intake passage and that is driven by the turbine and that is configured to supercharge intake air; an electric supercharger that includes a compressor wheel disposed in the intake passage at a position on an upstream side relative to the turbo-compressor, and an electric motor configured to drive the compressor wheel, and that is configured to supercharge intake air by driving the compressor wheel by means of the electric motor; a first intake bypass passage that bypasses the turbo-compressor; a first intake bypass valve configured to open and close the first intake bypass passage; first bypass control means for opening the first intake bypass valve in a case where a deceleration request with respect to the internal combustion engine is issued during driving of the compressor wheel by the electric motor; and electric motor control means for, in a case where the deceleration request is issued during driving of the compressor wheel by the electric motor, stopping driving of the compressor wheel by the electric motor at a same time as the first intake bypass valve starts a valve opening operation or after the first intake bypass valve starts a valve opening operation.

Further, according to a second aspect of the present invention, in the first aspect, the internal combustion engine system may include: a second intake bypass passage that bypasses the electric supercharger; a second intake bypass valve configured to open and close the second intake bypass passage; and second bypass control means for, in a case where the deceleration request is issued during driving of the compressor wheel by the electric motor, opening the second intake bypass valve after the first intake bypass valve is opened.

Further, according to a third aspect of the present invention, in the second aspect, the second bypass control means may open the second intake bypass valve after a predetermined time period elapses from a time point at which the first intake bypass valve is opened.

Further, according to a fourth aspect of the present invention, in the second aspect, the second bypass control means may open the second intake bypass valve in a case where an outlet pressure of the turbo-compressor decreases to a pressure that is less than or equal to a predetermined pressure threshold value after the first intake bypass valve is opened.

Further, according to a fifth aspect of the present invention, in the second aspect, the second bypass control means may open the second intake bypass valve in a case where a rotational speed of the turbo-compressor decreases to a rotational speed that is less than or equal to a predetermined rotational speed threshold value after the first intake bypass valve is opened.

According to the first aspect of the present invention, in a case where a deceleration request with respect to the internal combustion engine is issued during driving of the compressor wheel by the electric motor, driving of the compressor wheel by the electric motor is stopped at the same time as the first intake bypass valve starts a valve opening operation or after the first intake bypass valve starts a valve opening operation. By this means, it is possible to suppress the occurrence of a situation in which, prior to opening of the first intake bypass valve, a ratio between the pressures before and after the turbo-compressor increases due to a decrease in the inlet pressure of the turbo-compressor that is caused by stopping the operation of the electric supercharger. Consequently, the occurrence of surge in the turbo-compressor at a time of deceleration can be effectively suppressed. Further, with regard to the occurrence of surge in the electric supercharger, the occurrence of surge is avoided by stopping the operation of the electric supercharger.

According to the second aspect of the present invention, in a case where the aforementioned deceleration request is issued, the second intake bypass valve can be opened at a timing at which the aforementioned decrease in the inlet pressure of the turbo-compressor is not promoted.

According to the third to fifth aspects of the present invention, the aforementioned promotion of a decrease in the inlet pressure of the turbo-compressor accompanying opening of the second intake bypass valve can be more reliably suppressed.

### Brief Description of the Drawings

Fig. 1 is a view for schematically describing the configuration of an internal combustion engine system according to a first embodiment of the present invention;
Fig. 2 is a view for describing a relation between two supercharging modes that are used in the internal combustion engine system and engine operation ranges;
Fig. 3 is a compressor map that is used for describing compressor surge at deceleration;
Figs. 4A to 4H are time charts for describing surge suppression control for a time of deceleration in the first embodiment of the present invention;
Fig. 5 is a flowchart of a routine that is executed in the first embodiment of the present invention;
Figs. 6A to 6H are time charts for describing a modification of the surge suppression control for a time of deceleration in the first embodiment of the present invention;
Fig. 7 is a view for schematically describing the configuration of an internal combustion engine system according to a second embodiment of the present invention;
Fig. 8 is a flowchart of a routine that is executed in the second embodiment of the present invention;
Fig. 9 is a view for schematically describing the configuration of an internal combustion engine system according to a third embodiment of the present invention; and
Fig. 10 is a flowchart of a routine that is executed in the third embodiment of the present invention.

### Detailed Description of the Preferred Embodiments

### First Embodiment

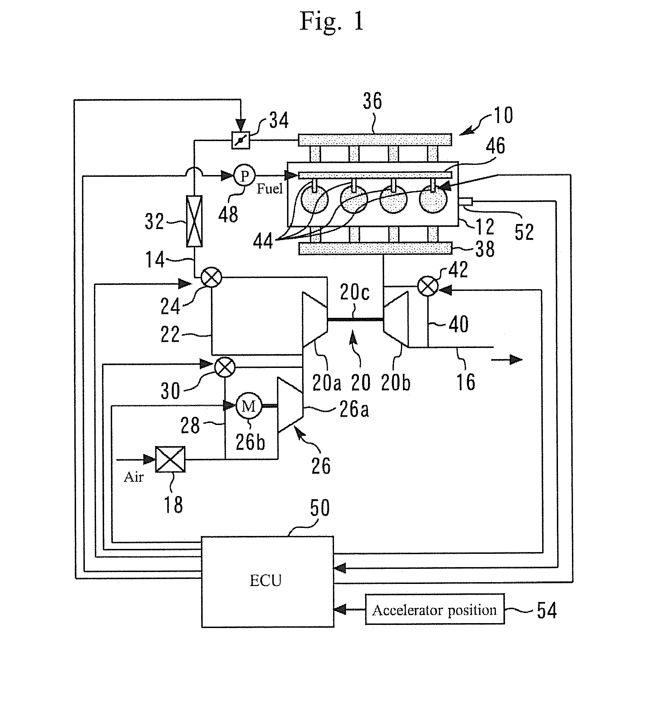

First, a first embodiment of the present invention will be described with reference to Figs. 1 to 5.

### [Hardware configuration of internal combustion engine system of first embodiment]

Fig. 1 is a view for schematically describing the configuration of an internal combustion engine system 10 according to the first embodiment of the present invention. The internal combustion engine system 10 shown in Fig. 1 includes an internal combustion engine main body 12. The internal combustion engine system 10 is a system that has a compression-ignition type engine (as one example, a diesel engine), and is mounted in a vehicle and used as a power source of the vehicle. An intake passage 14 and an exhaust passage 16 communicate with the respective cylinders of the internal combustion engine main body 12.

An air cleaner 18 is provided in the vicinity of an inlet of the intake passage 14. A turbo-compressor 20a of a turbosupercharger 20 for supercharging intake air is disposed in the intake passage 14 at a position on a downstream side relative to the air cleaner 18. A centrifugal compressor or an axial flow compressor is used as the turbo-compressor 20a. The turbosupercharger 20 includes a turbine 20b that is provided in the exhaust passage 16 and that operates by means of exhaust energy of exhaust gas. The turbo-compressor 20a is integrally connected to the turbine 20b through a connecting shaft 20c, and is rotationally driven by exhaust energy of exhaust gas that enters the turbine 20b. The internal combustion engine system 10 also includes a first intake bypass passage 22 that bypasses the turbo-compressor 20a, and a first intake bypass valve 24 that opens and closes the first intake bypass passage 22. For example, a solenoid valve can be used as the first intake bypass valve 24. Note that, although in Fig. 1 an upstream-side end of the first intake bypass passage 22 is provided further downstream than a downstream-side end of a second intake bypass passage 28 that is described later, the present invention is not limited to this configuration, and the upstream-side end of the first intake bypass passage 22 may be provided further upstream than the upstream-side end of the second intake bypass passage 28.

A compressor wheel 26a of an electric supercharger 26 is disposed in the intake passage 14 at a position that is on the downstream side relative to the air cleaner 18 and is on the upstream side relative to the turbo-compressor 20a (more specifically, the upstream-side end of the first intake bypass passage 22). The compressor wheel 26a is driven by an electric motor 26b. Electric power from a power source that is not shown in the drawing is supplied to the electric motor 26b. The electric supercharger 26 is also a centrifugal compressor or an axial flow compressor. According to the electric supercharger 26, intake air can be supercharged by driving the compressor wheel 26a by means of the electric motor 26b. A second intake bypass passage 28 that bypasses the compressor wheel 26a, and a second intake bypass valve 30 that opens and closes the second intake bypass passage 28 are also provided. For example, a solenoid valve can be used as the second intake bypass valve 30.

An intercooler 32 is disposed in the intake passage 14 at a position on the downstream side relative to the turbo-compressor 20a. The intercooler 32 is used to cool intake air compressed by the turbo-compressor 20a or by both the turbo-compressor 20a and the electric supercharger 26. An electronically controlled throttle valve that opens and closes the intake passage 14 is disposed in the intake passage 14 on the downstream side relative to the intercooler 32. A portion of the intake passage 14 that is on the downstream side relative to the throttle valve 34 is configured as an intake manifold 36. Intake air is distributed to the respective cylinders through the intake manifold 36.

Exhaust gas from the respective cylinders is collected by an exhaust manifold 38 in the exhaust passage 16, and discharged to the downstream side. An exhaust bypass passage 40 that bypasses the turbine 20b is connected to the exhaust passage 16. A waste gate valve 42 is disposed in the exhaust bypass passage 40 as a bypass valve for opening and closing the exhaust bypass passage 40.

A fuel injection valve 44 is arranged in each cylinder of the internal combustion engine main body 12. The fuel injection valve 44 directly injects fuel into the relevant cylinder. High-pressure fuel that is pressurized by a fuel pump 48 is supplied through a common rail 46 to the fuel injection valves 44 of the respective cylinders.

The system of the present embodiment also includes an electronic control unit (ECU) 50. The ECU 50 includes at least an input/output interface, a memory, and a central processing unit (CPU). The input/output interface is provided in order to take in sensor signals from various sensors installed in the internal combustion engine system 10, and also to output actuating signals to various actuators provided in the internal combustion engine system 10. The sensors from which the ECU 50 takes in signals include various sensors for acquiring the engine operating state such as a crank angle sensor 52 for acquiring the rotational position of a crankshaft and an engine speed. The aforementioned sensors also include an accelerator position sensor 54 that detects a depression amount of an accelerator pedal (accelerator position) of the vehicle in which the internal combustion engine system 10 is mounted. The actuators to which the ECU 50 outputs actuating signals include various actuators for controlling the engine operations such as the above described first intake bypass valve 24, electric motor 26b, second intake bypass valve 30, throttle valve 34, waste gate valve 42, fuel injection valve 44 and fuel pump 48. Various control programs and maps and the like for controlling the internal combustion engine system 10 are stored in the memory. The CPU reads out a control program or the like from the memory and executes the control program, and generates actuating signals for the various actuators based on sensor signals taken in.

### [Supercharging modes]

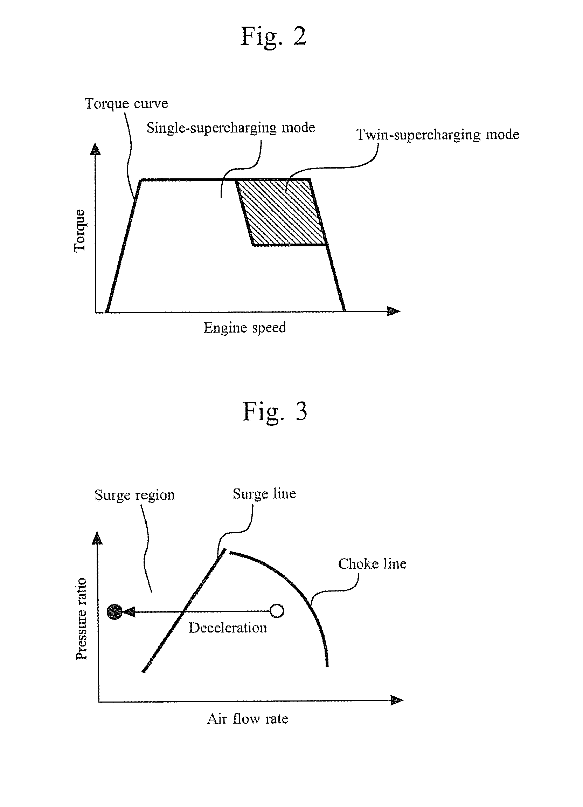

Fig. 2 is a view for describing the relation between two supercharging modes that are used in the internal combustion engine system 10 and engine operation ranges. In the internal combustion engine system 10, either one mode among a single-supercharging mode and a twin-supercharging mode is selected in accordance with the engine operation range.

The single-supercharging mode is a supercharging mode that utilizes only the turbosupercharger 20. In the single-supercharging mode, passage of a current to the electric motor 26b is stopped, and the second intake bypass valve 30 is fully opened. As a result, intake air that is supercharged by the turbo-compressor 20a utilizing exhaust energy is supplied to the combustion chambers of the respective cylinders while avoiding the occurrence of a situation in which the compressor wheel 26a constitutes intake resistance.

On the other hand, the twin-supercharging mode is a supercharging mode that utilizes the electric supercharger 26 together with the turbosupercharger 20. In the twin-supercharging mode, a current is passed to the electric motor 26b in a state in which the second intake bypass valve 30 has basically been fully closed. As a result, intake air introduced into the intake passage 14 is subjected to supercharging by the electric supercharger 26 and the turbo-compressor 20a in that order and is thereafter supplied to the combustion chambers of the respective cylinders. By this means, the electric supercharger 26 can be utilized to assist the supercharging by the turbosupercharger 20.

As shown in Fig. 2, the twin-supercharging mode is used in a high-rotation and high-load range in the vicinity of an output point at which the highest output of the engine is obtained. The single-supercharging mode corresponds to a supercharging mode in a case where supercharging is performed outside of the operation range in which the twin-supercharging mode is used.

### [Deceleration surge]

Fig. 3 is a compressor map that is used for describing compressor surge at deceleration. In Fig. 3, the vertical axis represents a pressure ratio (outlet pressure/inlet pressure) between the pressures before and after the compressor, and the horizontal axis represents the flow rate of air passing through the compressor. The characteristics of this compressor map are common to both the turbo-compressor 20a and the electric supercharger 26. In Fig. 3, a region on a low air flow rate side relative to a surge line corresponds to a surge region in which surge occurs.

Fundamentally, at a time of deceleration, surge in the turbo-compressor 20a can be avoided by opening the first intake bypass valve 24 to allow the pressure downstream of the turbo-compressor 20a to escape to the upstream side through the first intake bypass passage 22. In this case, in the internal combustion engine system 10 in which the electric supercharger 26 and the turbo-compressor 20a are provided in series in that order, the following situation arises when passage of a current to the electric motor 26b is stopped in order to stop the operation of the electric supercharger 26 when a request to decelerate the internal combustion engine has been issued during operation in the twin-supercharging mode.

That is, the rate of a decrease in the rotational speed of the electric supercharger 26 after operation thereof is stopped is faster than a decrease in the rotational speed of the turbo-compressor 20a to which a driving force that is based on the exhaust energy continues to be supplied. Consequently, while on the one hand there is a rapid decrease in the pressure downstream of the electric supercharger 26, that is, the inlet pressure of the turbo-compressor 20a, on the other hand it is difficult for the outlet pressure of the turbo-compressor 20a to decrease. Therefore, when operation of the electric supercharger 26 is stopped prior to opening the first intake bypass valve 24, the pressure ratio between the pressures before and after the turbo-compressor 20a is liable to increase. If the pressure ratio remains high under circumstances in which the flow rate of air passing through the turbo-compressor 20a decreases due to deceleration of the internal combustion engine, the operating point of the turbo-compressor 20a moves to the low air flow rate side on the compressor map. Consequently, in a case where the movement amount of the operating point is large as in the example illustrated in Fig. 3, the operating point of the compressor enters the surge region and surge occurs.

The following supplementary points relate to surge (deceleration surge) that occurs at a time of deceleration in the above described situation. A first point is that, in the internal combustion engine system 10, in a case where a request from the driver to decelerate the internal combustion engine is detected based on depression of the accelerator pedal being released, in some cases control is performed to close the throttle valve 34 so as to cause the driver to experience a deceleration feeling. In a case in which it is presumed that such throttle control is performed, the flow rate of air passing through the turbo-compressor 20a is liable to rapidly decrease at a time of deceleration. Accordingly, in such a case, deceleration surge is liable to occur more markedly. However, even in a case in which such throttle control is not performed, if fuel injection is cut off or if the amount of injected fuel is reduced at a time of deceleration, the air flow rate will decrease accompanying a decrease in the engine speed. Therefore, the above described problem of deceleration surge can also occur in such cases, even though there is a difference in the extent to which the problem arises. A second point is that, in the present embodiment, in a case where a deceleration request is issued, passage of a current to the electric motor 26b is stopped in order to stop operation of the electric supercharger 26. Apart from simply stopping the passage of a current to the electric motor 26b as described above, the following method is also available as a method for stopping operation of the electric supercharger 26. That is, in order to quickly reduce the rotational speed of the electric supercharger 26 to zero, a method is available that imparts a braking force to the rotation of the electric motor 26b, that is, the rotation of the compressor wheel 26a, by utilizing a counter electromotive force that arises in the electric motor 26b that rotates through inertia after the passage of a current thereto is stopped. In a case where this method is used, a decrease in the inlet pressure of the turbo-compressor 20a accompanying the stoppage of the operation of the electric supercharger 26 becomes more marked, and hence deceleration surge is more liable to occur.

### [Characteristic control in first embodiment]

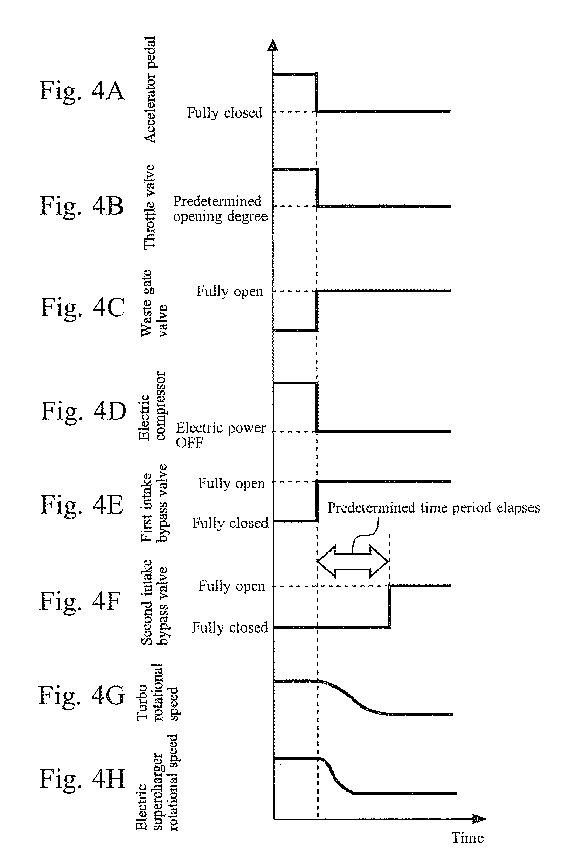

Figs. 4A to 4H are time charts for describing surge suppression control for a time of deceleration in the first embodiment of the present invention. In the present embodiment, in order to suppress the occurrence of the above described deceleration surge (more specifically, in order to avoid the occurrence of deceleration surge in the turbo-compressor 20a with respect to which occurrence of surge in the above described situation is a concern and further to avoid the occurrence of deceleration surge in the electric supercharger 26), when depression of the accelerator pedal is released while the electric supercharger 26 is operating, a configuration is adopted in which operations of respective actuators are also performed in the order described hereunder. Note that, the following description in the present specification relates to an example in which the respective opening degrees of the first intake bypass valve 24 and the second intake bypass valve 30 are controlled between a fully-open opening degree and a fully-closed opening degree. The terms "fully-open opening degree" and "fully-closed opening degree" used herein refer to a maximum opening degree and a minimum opening degree within a predetermined opening degree control range, respectively, and are not necessarily limited to 100% and 0% as the opening degrees of the valves. Further, as long as the opening degrees of the first and second intake bypass valve that are used for control in the present invention are controlled so that the advantageous effects of the present invention are obtained, the opening degrees of the first and second intake bypass valves are not limited to a fully-open opening degree and a fully-closed opening degree, and may each be arbitrary predetermined opening degrees.

When, as shown in Fig. 4A, depression of the accelerator pedal is released (accelerator is fully closed) during operation of the electric supercharger 26, as illustrated in Fig. 4B to Fig. 4E, the throttle valve 34 is closed so as to become a predetermined opening degree, the waste gate valve 42 is fully opened, passage of a current to the electric motor 26b is stopped, and the first intake bypass valve 24 is fully opened. Note that, the term "predetermined opening degree" of the throttle valve 34 that is mentioned above refers to an opening degree that is set in advance as an opening degree for enabling a deceleration feeling to be obtained at a time of deceleration.

Upon receiving a deceleration request, fuel injection is cut off or the fuel injection amount is decreased. By cutting off the fuel injection or the like accompanying closing of the throttle valve 34, the flow rate of exhaust gas decreases and, as shown in Fig. 4G, the turbo rotational speed (that is, the rotational speed of the turbo-compressor 20a) decreases. Further, by stopping the passage of a current to the electric motor 26b, as illustrated in Fig. 4H, the rotational speed of the electric supercharger 26 decreases. The second intake bypass valve 30 is fully opened after a predetermined time period elapses from a time point at which the first intake bypass valve 24 is opened. Note that, the waste gate valve 42 is opened to reduce the flow rate of exhaust gas that flows into the turbine 20b at a time of deceleration and thereby quickly decrease the rotational speed of the turbo-compressor 20a as much as possible. By this means, it is possible to make it difficult for deceleration surge to occur in the turbo-compressor 20a in comparison to a case where the waste gate valve 42 is not opened at the time of deceleration. However, whether or not an operation to open to the waste gate valve 42 is performed in this case is merely a factor that influences the extent of a decrease in the rotational speed of the turbo-compressor 20a at the time of deceleration, and even in a case where this valve opening operation is not performed, the problem of deceleration surge that was described above with reference to Fig. 3 remains.

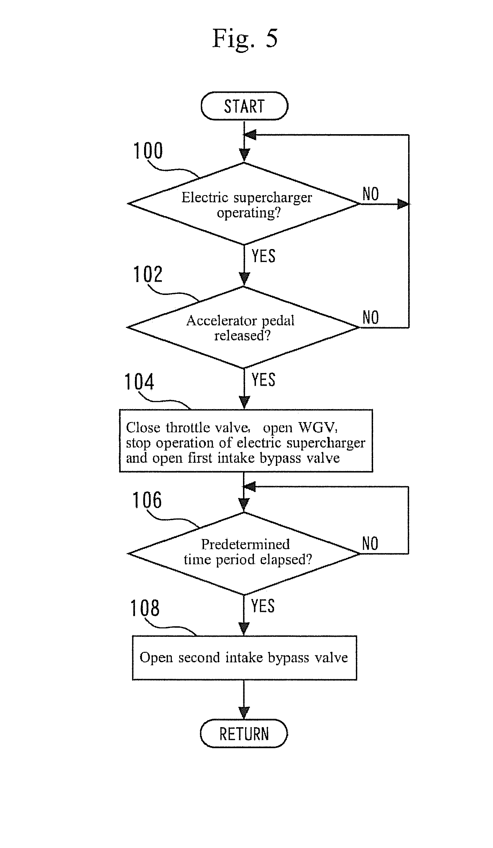

Fig. 5 is a flowchart illustrating a control routine that the ECU 50 executes to realize surge suppression control for a time of deceleration in the first embodiment of the present invention. Note that the present routine is repeatedly executed for each predetermined control period.

In the routine shown in Fig. 5, first, in step 100, the ECU 50 determines whether or not the electric supercharger 26 is operating. When the engine operation range is a high-rotation and high-load range that utilizes the twin-supercharging mode, the result of the determination in the present step 100 is affirmative.

If the result of the determination in step 100 is affirmative, the ECU 50 proceeds to step 102 to determine whether or not depression of the accelerator pedal has been released. If the result determined in the present step 102 is affirmative, that is, if a request to decelerate the internal combustion engine is detected, the ECU 50 proceeds to step 104. In step 104, the throttle valve 34 is closed, the waste gate valve (WGV) is opened, the operation of the electric supercharger 26 is stopped by stopping the passage of a current to the electric motor 26b, and the first intake bypass valve 24 is opened.

Next, the ECU 50 proceeds to step 106 to determine whether or not a predetermined time period has elapsed from the time point at which execution of the processing in step 104 started. This predetermined time period is previously set as a value for determining whether or not the operating point of the turbo-compressor 20a moved as far as an operating range in which it can be said that deceleration surge does not occur due to a decrease in the outlet pressure of the turbo-compressor 20a that accompanies opening of the first intake bypass valve 24. If it is determined as a result that the aforementioned predetermined time period has elapsed, the ECU 50 proceeds to step 108. In step 108, the second intake bypass valve 30 is opened.

According to the above described surge suppression control for a time of deceleration, in a case where a deceleration request is issued during driving of the compressor wheel 26a by the electric motor 26b (that is, during operation of the electric supercharger 26), the first intake bypass valve 24 is opened and, simultaneously with the start of the valve opening operation, operation of the electric supercharger 26 is stopped. In other words, according to this control, consideration is given to ensuring that operation of the electric supercharger 26 does not stop earlier than the start of an operation to open the first intake bypass valve 24. By this means, it is possible to suppress the occurrence of a situation in which the inlet pressure of the turbo-compressor 20a decreases due to operation of the electric supercharger 26 being stopped prior to opening the first intake bypass valve 24 and, consequently, the ratio between the pressures before and after the turbo-compressor 20a increases. Thus, the occurrence of deceleration surge in the turbo-compressor 20a can be effectively suppressed. Further, the occurrence of deceleration surge in the electric supercharger 26 is avoided by stopping the operation of the electric supercharger 26. Therefore, according to the present control, the occurrence of deceleration surge in both the turbo-compressor 20a and the electric supercharger 26 can be effectively suppressed.

Further, in the internal combustion engine system 10, when operation of the electric supercharger 26 is stopped and the engine operation returns to the single-supercharging mode, the second intake bypass valve 30 on the electric supercharger 26 is opened to avoid an increase in intake resistance due to the presence of the compressor wheel 26a. In the surge suppression control for a time of deceleration of the present embodiment, as described above, consideration is also given to the timing at which the second intake bypass valve 30 is opened. That is, the second intake bypass valve 30 is opened after a predetermined time period has elapsed from the time point at which an operation to open the first intake bypass valve 24 on the turbo-compressor 20a side is started. In contrast to the above described operation, if the second intake bypass valve 30 is opened at or before the start of an operation to open the first intake bypass valve 24, the inlet pressure of the turbo-compressor 20a is liable to decrease because the upstream side of the turbo-compressor 20a and the upstream side of the electric supercharger 26 will communicate through the second intake bypass passage 28. This fact causes the above described problem of deceleration surge that relates to the turbo-compressor 20a to occur more markedly. In contrast, according to the present control, the above described problem can be avoided since the second intake bypass valve 30 is opened after the first intake bypass valve 24 is opened. In addition, because the second intake bypass valve 30 is opened after the aforementioned predetermined time period has elapsed from the time that the first intake bypass valve 24 opens, the above described problem can be avoided more reliably.

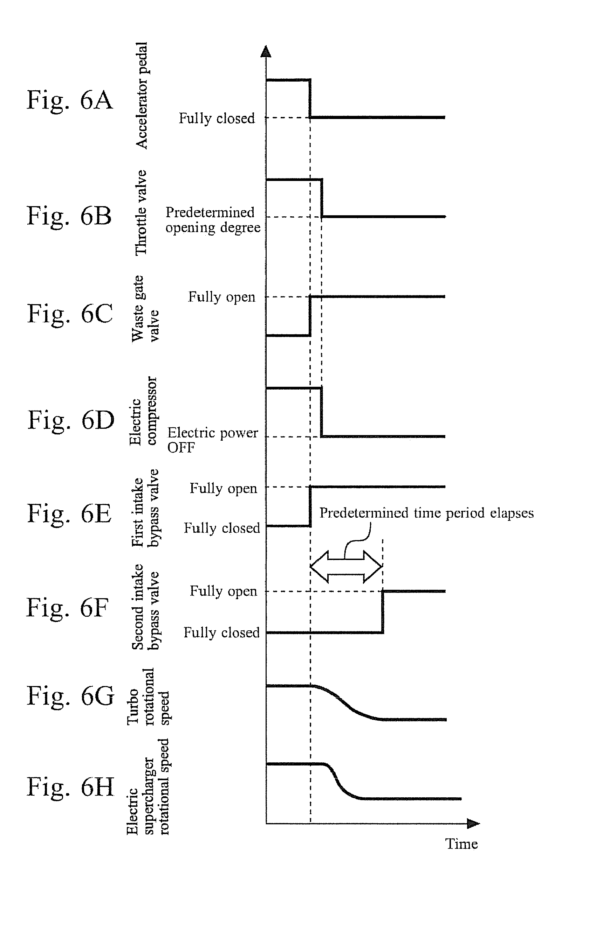

Figs. 6A to 6H are time charts for describing a modification of the surge suppression control for a time of deceleration in the first embodiment of the present invention. In the above described first embodiment, an example is described in which operation of the electric supercharger 26 is stopped simultaneously with opening of the first intake bypass valve 24. However, the timing for stopping operation of the electric supercharger 26 may also be after the operation to open the first intake bypass valve 24 starts, and in the example shown in Fig. 6D operation of the electric supercharger 26 is stopped after the operation to open the first intake bypass valve 24 is completed. By this means, since operation of the electric supercharger 26 is stopped after lowering the pressure ratio between the pressures before and after the turbo-compressor 20a by opening the first intake bypass valve 24 at a time of deceleration, the occurrence of deceleration surge in the turbo-compressor 20a can be suppressed more reliably. Note that, in the example illustrated in Figs. 6A to 6H, accompanying the delay in the timing for stopping operation of the electric supercharger 26 to suppress the occurrence of deceleration surge in the electric supercharger 26, as shown in Fig. 6B, the timing for closing the throttle valve 34 is delayed until the timing for stopping operation of the electric supercharger 26.

Note that, since a time of a request to decelerate from the high-rotation and high-load range that utilizes the twin-supercharging mode is a time of a state in which the turbo-compressor 20a is caused to exert a high supercharging effect, it can be said that such a time is a situation in which deceleration surge that is caused by stopping the operation of the electric supercharger 26 is liable to occur in the turbo-compressor 20a. However, with regard to the usage modes of the electric supercharger 26, apart from using the electric supercharger 26 in a high-rotation and high-load range as described above, for example, the usage modes of the electric supercharger 26 may also include actuating the electric supercharger 26 to assist the turbosupercharger 20 when rapid acceleration is requested during use in a low-rotation and low-load range. The objects for application of surge suppression control for a time of deceleration in the present embodiment as described above may also include a case where a request to decelerate the internal combustion engine is issued during operation of the electric supercharger 26 in such a situation.

Note that, in the above described first embodiment, "first bypass control means" and "electric motor control means" according to the first aspect of the present invention are realized by the ECU 50 executing the processing in step 104 under circumstances in which the results determined in steps 100 and 102 are both affirmative.

Further, "second bypass control means" according to the second and third aspects of the present invention is realized by the ECU 50 executing step 108 under circumstances in which the result determined in step 106 is affirmative.

### Second Embodiment

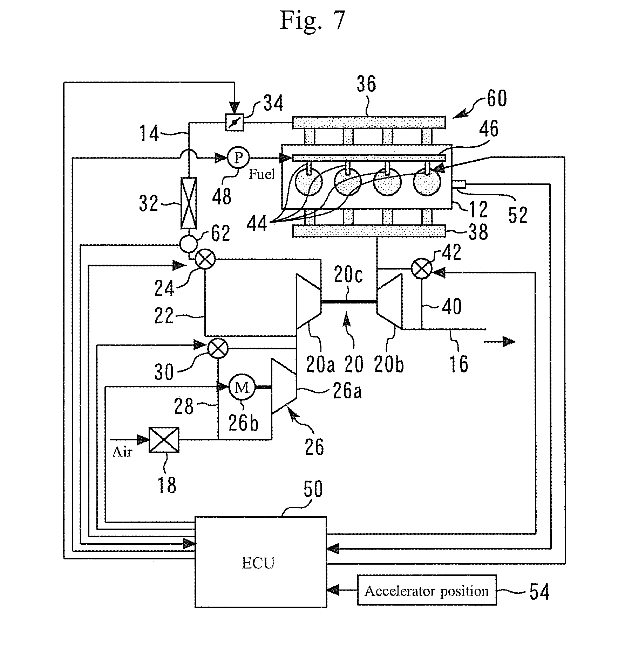

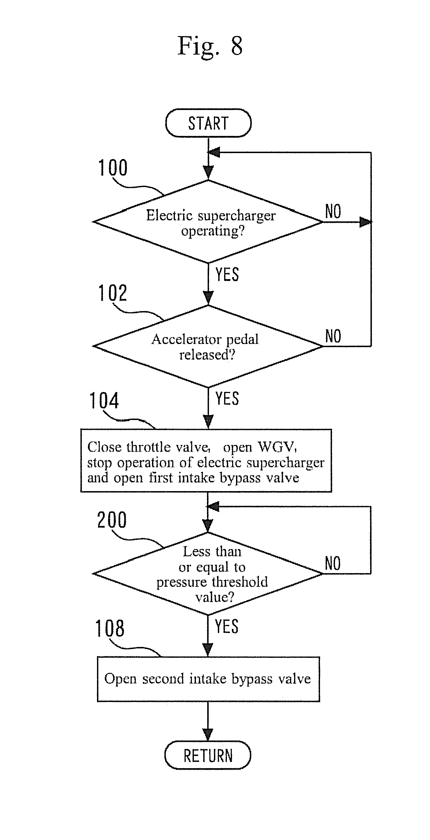

Next, a second embodiment of the present invention will be described referring to Figs. 7 and 8.

### [Hardware configuration of internal combustion engine system of second embodiment]

Fig. 7 is a view for schematically describing the configuration of an internal combustion engine system 60 according to a second embodiment of the present invention. The internal combustion engine system 60 of the present embodiment has the same configuration as the internal combustion engine system 10 of the first embodiment except that the internal combustion engine system 60 includes an intake air pressure sensor 62 that is provided in the intake passage 14 at a position that is on a downstream side relative to the turbo-compressor 20a (and on an upstream side relative to the intercooler 32). The intake air pressure sensor 62 is connected to the above described ECU 50.

### [Characteristic control in second embodiment]

Fig. 8 is a flowchart illustrating a control routine that the ECU 50 executes to realize surge suppression control for a time of deceleration in the second embodiment of the present invention. The surge suppression control of the present embodiment is the same as the control in the first embodiment except for the difference described hereunder.

In the routine shown in Fig. 8, after opening the first intake bypass valve 24 in step 104, the ECU 50 proceeds to step 200. In step 200, the ECU 50 determines whether or not the outlet pressure of the turbo-compressor 20a that is detected by the intake air pressure sensor 62 is less than or equal to a predetermined pressure threshold value. The pressure threshold value is previously set as a value for determining whether or not the outlet pressure of the turbo-compressor 20a has decreased to a level at which it can be determined that the operating point of the turbo-compressor 20a moves as far as an operating region in which it can be said that deceleration surge does not occur.

Consequently, when the outlet pressure becomes less than or equal to the aforementioned pressure threshold value, the ECU 50 advances to step 108 and opens the second intake bypass valve 30. Similar advantageous effects as those of the control of the first embodiment can be obtained by the above described surge suppression control for a time of deceleration also. Note that, acquisition of the outlet pressure of the turbo-compressor 20a is not limited to detecting the outlet pressure utilizing the intake air pressure sensor 62, and for example the outlet pressure of the turbo-compressor 20a may be estimated utilizing a detection value of another existing sensor in the system.

Note that, in the above described second embodiment, "second bypass control means" according to the second and fourth aspects of the present invention is realized by the ECU 50 executing step 108 under circumstances in which the result determined in step 200 is affirmative.

### Third Embodiment

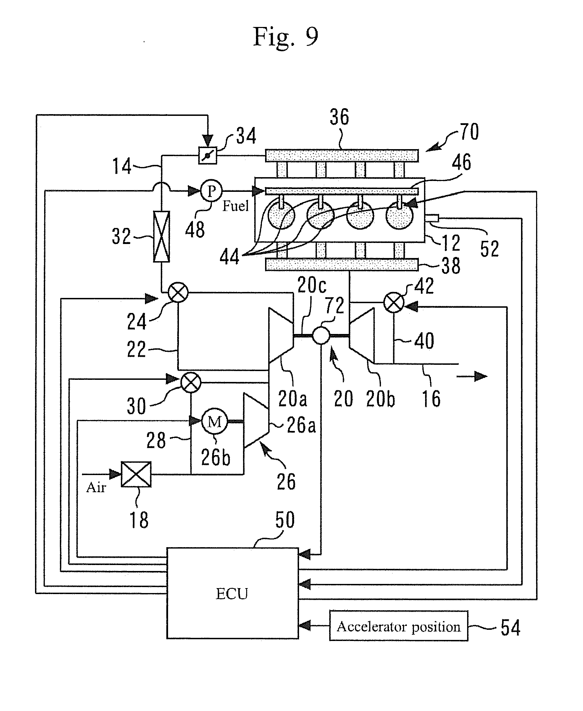

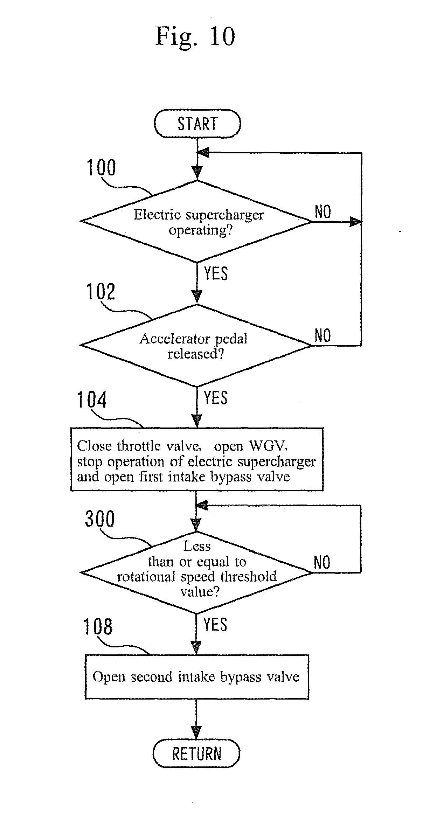

Next, a third embodiment of the present invention will be described referring to Figs. 9 and 10.

### [Hardware configuration of internal combustion engine system of third embodiment]

Fig. 9 is a view for schematically describing the configuration of an internal combustion engine system 70 according to a third embodiment of the present invention. The internal combustion engine system 70 of the present embodiment has the same configuration as the internal combustion engine system 10 of the first embodiment except that the internal combustion engine system 70 includes a turbo rotational speed sensor 72 that detects a turbo rotational speed (that is, a rotational speed of the turbo-compressor 20a). The turbo rotational speed sensor 72 is connected to the above described ECU 50.

### [Characteristic control in third embodiment]

Fig. 10 is a flowchart illustrating a control routine that the ECU 50 executes to realize surge suppression control for a time of deceleration in the third embodiment of the present invention. The surge suppression control of the present embodiment is the same as the control in the first embodiment except for the difference described hereunder.

In the routine shown in Fig. 10, after opening the first intake bypass valve 24 in step 104, the ECU 50 proceeds to step 300. In step 300, the ECU 50 determines whether or not the rotational speed of the turbo-compressor 20a that is detected by the turbo rotational speed sensor 72 is less than or equal to a predetermined rotational speed threshold value. The rotational speed threshold value is previously set as a value for determining whether or not the rotational speed of the turbo-compressor 20a has decreased to a level at which it can be determined that the operating point of the turbo-compressor 20a moves as far as an operating region in which it can be said that deceleration surge does not occur.

Consequently, when the rotational speed of the turbo-compressor 20a becomes less than or equal to the aforementioned rotational speed threshold value, the ECU 50 advances to step 108 and opens the second intake bypass valve 30. Similar advantageous effects as those of the control of the first embodiment can be obtained by the above described surge suppression control for a time of deceleration also. Note that, acquisition of the rotational speed of the turbo-compressor 20a is not limited to detecting the rotational speed utilizing the turbo rotational speed sensor 72, and for example the rotational speed of the turbo-compressor 20a may be estimated utilizing a detection value of another existing sensor in the system.

Note that, in the above described third embodiment, "second bypass control means" according to the second and fifth aspects of the present invention is realized by the ECU 50 executing step 108 under circumstances in which the result determined in step 300 is affirmative.

Although control for suppressing the occurrence of deceleration surge that takes a diesel engine that is a compression-ignition type engine as an object has been described in the foregoing first to third embodiments, the control of the present invention may also be applied to a spark-ignition type engine such as a gasoline engine in which the intake air flow rate is adjusted utilizing a throttle valve.

Note that, in the above described first to third embodiments, examples are described in which the ECU 50 determines that there is a "request to decelerate the internal combustion engine" when depression of the accelerator pedal is released. A situation that corresponds to circumstances in which a "request to decelerate the internal combustion engine" is issued that is based on depression of the accelerator pedal being released is mainly a time when depression of the accelerator pedal is released when the driver wishes to decelerate the vehicle. Apart from the aforementioned situation, a situation in which depression of the accelerator pedal is released temporarily when a gear stage is changed to a higher gear stage at the time of acceleration of a vehicle having a manual transmission corresponds to a situation in which a "request to decelerate the internal combustion engine" is issued. However, a "request to decelerate the internal combustion engine" is not necessarily limited to an occasion when depression of the accelerator pedal is released. For example, in a vehicle in which a clutch that is interposed between a spark-ignition type engine and a transmission is electronically controlled, in a state in which the accelerator pedal remains depressed at a time of acceleration of the vehicle, control is sometimes performed that closes a throttle valve after releasing the clutch in order to change the gear stage to a higher gear stage. In such a case, a command to close the throttle valve that is issued by the ECU corresponds to a "request to decelerate the internal combustion engine".

## Claims

1. An internal combustion engine system (10, 60 or 70), comprising:
a turbosupercharger (20) including a turbine (20b) that is provided in an exhaust passage (16) and that operates by means of exhaust energy of an internal combustion engine, and a turbo-compressor (20a) that is provided in an intake passage (14) and that is driven by the turbine (20b) and that is configured to supercharge intake air;
an electric supercharger (26) that includes a compressor wheel (26a) disposed in the intake passage (14) at a position on an upstream side relative to the turbo-compressor (26a), and an electric motor (26b) configured to drive the compressor wheel (26a), and that is configured to supercharge intake air by driving the compressor wheel (26a) by means of the electric motor (26b);
a first intake bypass passage (22) that bypasses the turbo-compressor (20a); and
a first intake bypass valve (24) configured to open and close the first intake bypass passage (22),
the internal combustion engine system (10, 60 or 70) being **characterized by** comprising:
first bypass control means for opening the first intake bypass valve (24) in a case where a deceleration request with respect to the internal combustion engine is issued during driving of the compressor wheel (26a) by the electric motor (26b); and
electric motor control means for, in a case where the deceleration request is issued during driving of the compressor wheel (26a) by the electric motor (26b), stopping driving of the compressor wheel (26a) by the electric motor (26b) at a same time as the first intake bypass valve (24) starts a valve opening operation or after the first intake bypass valve (24) starts a valve opening operation.

2. The internal combustion engine system (10, 60, 70) according to claim 1, further comprising:
a second intake bypass passage (28) that bypasses the electric supercharger (26);
a second intake bypass valve (30) configured to open and close the second intake bypass passage (28); and
second bypass control means (50) for, in a case where the deceleration request is issued during driving of the compressor wheel (26a) by the electric motor (26b), opening the second intake bypass valve (30) after the first intake bypass valve is opened.

3. The internal combustion engine system according to claim 2, wherein the second bypass control means (50) is configured to open the second intake bypass valve (30) after a predetermined time period elapses (106) from a time point at which the first intake bypass valve (24) is opened.

4. The internal combustion engine system according to claim 2, wherein the second bypass control means (50) is configured to open the second intake bypass valve (30) in a case where an outlet pressure of the turbo-compressor (20a) decreases to a pressure that is less than or equal to a predetermined pressure threshold value (200) after the first intake bypass valve (24) is opened.

5. The internal combustion engine system according to claim 2, wherein the second bypass control means (50) is configured to open the second intake bypass valve (30) in a case where a rotational speed of the turbo-compressor (20a) decreases to a rotational speed that is less than or equal to a predetermined rotational speed threshold value (300) after the first intake bypass valve (24) is opened.
